(19) Europäisches Patentamt
European Patent Office
Office européen des brevets

(11) EP 0 954 967 B1

(12) **EUROPEAN PATENT SPECIFICATION**

(45) Date of publication and mention of the grant of the patent:
**26.03.2003 Bulletin 2003/13**

(51) Int Cl.[7]: **A01N 25/12**, A01N 25/08, A01N 43/08, A01N 51/00

(21) Application number: **99108572.1**

(22) Date of filing: **06.05.1999**

(54) **Slow release pesticide formulations**

Pestizide Formulierungen mit verzögerter Abgabe

Formulations pesticides à libération lente

(84) Designated Contracting States:
**ES FR IT**

(30) Priority: **06.05.1998 JP 12357998**

(43) Date of publication of application:
**10.11.1999 Bulletin 1999/45**

(73) Proprietor: **Mitsui Chemicals, Inc.**
**Tokyo 100 (JP)**

(72) Inventors:
- **Nukii, Yasuhiro**
  **Omuta-shi, Fukuoka (JP)**
- **Nagashima, Koichi**
  **Mobara-shi, Chiba (JP)**
- **Watanabe, Takashi**
  **Mobara-shi, Chiba (JP)**
- **Kawahara, Nobuyuki**
  **Mobara-shi, Chiba (JP)**
- **Nakamura, Masahiko**
  **Mobara-shi, Chiba (JP)**

(74) Representative: **Zumstein, Fritz, Dr. et al**
**Zumstein & Klingseisen**
**Patentanwälte**
**Bräuhausstrasse 4**
**80331 München (DE)**

(56) References cited:
**EP-A- 0 021 477** **EP-A- 0 529 975**
**EP-A- 0 649 845** **EP-A- 0 721 734**
**WO-A-95/34200** **US-A- 4 554 303**

- **CHEMICAL ABSTRACTS, vol. 81, no. 26, 30 December 1974 (1974-12-30) Columbus, Ohio, US; abstract no. 176110, LOPEZ, ISAURA ET AL: "Use of sugarcane wax in long-acting tablet preparation" XP002113950 & REV. CUBANA FARM. (1973), 7(1), 21-31 , 1973,**
- **DATABASE WPI Section Ch, Derwent Publications Ltd., London, GB; Class C03, AN 72-42456T XP002113951 & JP 47 023199 B (NIHON NOYAKU CO LTD)**
- **DATABASE WPI Section Ch, Week 9512 Derwent Publications Ltd., London, GB; Class B07, AN 95-085711 XP002113952 & JP 07 011285 A (NISSHIN OIL MILLS LTD), 13 January 1995 (1995-01-13) & PATENT ABSTRACTS OF JAPAN vol. 095, no. 004, 31 May 1995 (1995-05-31) & JP 07 011285 A**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 954 967 B1

## Description

Field of the Invention

This invention relates to a slow release pesticide formulation which allows to apply simply and easily a pesticidal active ingredient to control pests in crops, in particular containing at least one pesticidal component, hydrophobic substance in an ester family and inorganic dilution carrier.

Background of the Invention

Recently, expansion of farming size and mechanization are being rapidly developed in rice growing in order to reduce cost in rice crop. Correspondingly, technical innovation in application methods of pesticide has progressed and various cost-saving formulations and application methods are being developed.

Various formulations, e.g., dust, granular, emulsifiable concentrate, wettable powder, flowable are being used for various pesticides such as insecticides used in rice fields. Method of application of these formulation to rice fields is generally direct spray. In most occasions, the direct spray will be made by a worker entering into rice fields carrying heavy application equipment on his back. This is very hard work and not favorable for the worker. Therefore, there is a strong demand for developing further labor-saving formulation recipes and application method.

Recently, rather than direct spray, development of methods for seedling box treatment in which pesticidal composition is applied to rice seedling in the box prior to transplanting is proceeding. The greatest advantage for rice seedling box treatment is that rice seedlings already treated with pesticide can be transplanted to rice field so that it is unnecessity to enter into the field for pesticide application. Therefore, rice seedling box treatment is one of the ideal labor-saving application method.

Since insect pests damaging rice plants would generally appear for long period from after transplanting up to after ear-emergence, long lasting and stable activity is required for pesticide active ingredient used in rice cultivation. Heretofore, as formulation to maintain a long lasting effectiveness of pesticide active ingredient, a pesticide formulation using paraffin wax and the like is well known. This formulation is prepared by mixing a pesticide active ingredient with carbohydrate wax and by diluting with or making to hold on mineral matter in order to give hydrophobic property. However, such formulation in the prior art was impossible to highly control release of pesticide active ingredient, since it controls release of pesticide active ingredient mainly depending on water repellency of wax .

A method to reduce release of pesticide active ingredient using such wax as matrix is disclosed in the Patent Gazette WO 95/09532. According to the patent gazette, pesticide compositions containing a pesticide active ingredient, hydrophobic substance having melting point not lower than 50°C and substance having oil absorption capacity are claimed, but all compositions referred to its embodiments include a compound which control releasing rate (release control agent) of pesticide active ingredient.

According to investigation made by the applicants, it was found that it was impossible to achieve a satisfactory control of releasing by only depending on the water repellency of wax. Further, although such slow release pesticide composition containing a release control agent itself showed some degree of slow release of pesticide active ingredient, it was found that near 100% release of pesticide active ingredient in the composition was difficult to achieve and large amount of pesticide active ingredient remained unreleased in the composition.

As a reason for a large amount of pesticide active ingredient remaining in the composition, it is considered that a uniform matrix is not formed in the composition due to poor compatibility between the release control agent and the wax used. The applicants re-examined the Patent Gazette WO 95/09532 and found that basic releasing pattern was parabolic, i.e., an initial release rate was high, but releasing stopped on the way, and that it was impossible to maintain a constant release of pesticide active ingredient for long period by retarding the initial releasing rate.

Thus, no appropriate slow release pesticide formulation is known as yet.

In the Publication of Unexamined Application EP 0649845 A1, furanyl compounds represented by the general formula (A) are described,

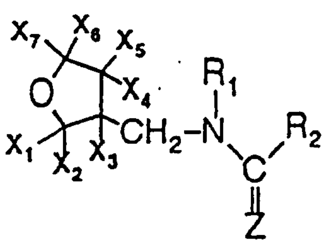

(A)

wherein, $X_1$, $X_2$, $X_3$, $X_4$, $X_5$, $X_6$ and $X_7$ represent for hydrogen atom or alkyl groups of C1 to C4, $R_1$ represents hydrogen atom, alkyl groups of C1 to C5, alkenyl group of C3, benzyl group, alkoxyalkyl groups having C2 to C4 in whole group, alkyloxy carbonyl groups of C1 to C3, phenoxy carbonyl group, alkyl carbonyl groups of C1 to C6, alkenyl carbonyl groups of C2 to C3, cycloalkyl carbonyl groups of C3 to C6, benzoyl group, benzoyl group substituted with alkyl of C1 to C4, benzoyl group substituted with halogen atoms, 2-furanyl carbonyl group or N,N-dimethyl carbamoyl group; $R_2$ represents hydrogen atom, amino group, methyl group, alkyl amino groups of C1 to C5, di-substituted alkyl amino groups of C2 to C5 in whole group, 1-pyrrolidinyl group, alkenyl amino group of C3, alkynyl amino group of C3, methoxy amino group, alkoxyalkyl amino groups of C2 to C4 in whole group, methylthio group or $-N(Y_1)Y_2$, wherein $Y_1$ is alkyloxycarbonyl groups of C1 to C3, phenoxy carbonyl group, alkyl carbonyl groups of C1 to C6, alkenyl carbonyl groups of C2 to C3, cycloalkyl carbonyl groups of C3 to C6, benzoyl group, benzoyl group substituted with alkyl of C1 to C4, benzoyl group substituted with halogen, 2-furanyl carbonyl group, N,N-dimethyl carbamoyl group, (tetrahydro-3-furanyl) methyl group or benzyl group, $Y_2$ is hydrogen atom or alkyl groups of C1 to C5; Z represents $=N-NO_2$, $=CH-NO_2$ or $=N-CN$. These furanyl compounds are highly active in their insecticidal activity against a wide spectrum of insect pests. These compounds are highly soluble in water. Therefore, it was necessary to develop a high integrity of release control technique in order to maintain insecticidal activity for a long period in using these compounds for rice seedling box treatment.

## Summary of the Invention

The first object of the present invention is to provide a pesticide formulation which releases gradually pesticide active ingredient contained therein and maintains its biological activity for long period.

A further object of the present invention is to provide a pesticide formulation which allows to release pesticide active ingredient gradually and almost completely and which sufficiently maintains its biological activity for long period.

The applicants actively investigated a way to solve the problems mentioned above and found that release of pesticide active ingredient from pesticide formulation can be highly controlled by adding a hydrophobic substance containing free fatty acid and having a specific characteristics to the pesticide formulation. The present invention was completed based on this finding.

The present invention comprises (1) a slow release pesticide formulation, characterized in that at least one of pesticidal components, a hydrophobic substance in an ester family which has a melting point not lower than 60°C but lower than the melting point of the pesticidal component and has an acid value from 10 to 50mg KOH/g, and inorganic dilution carrier, and (2) a slow release pesticide formulation obtained by kneading a mixture of at least one of pesticidal components, a hydrophobic substance in an ester family which has a melting point not lower than 60°C but lower than the melting point of the pesticidal component and has an acid value from 10 to 50mg KOH/g, and inorganic dilution carrier while heating thereof, followed by granulating and then by crushing thereof, characterized in that, during the process of kneading and granulating, the liquid portion is the hydrophobic substance in an ester family and the non liquid portion is pesticidal components and inorganic dilution carrier.

According to the present invention it became possible to control appropriately release of pesticide active ingredient(s) in slow release pesticide formulation. The slow release pesticide formulation according to the present invention provides gradual and complete release of pesticide active ingredient(s). Therefore, the pesticide formulation according to the present invention is suitable for use in rice seedling box and superior as labor-saving formulation for treatment.

The slow release pesticide formulation according to the present invention provides substantially improved release of active ingredient(s) compared to heretofore slow release pesticide formulation and advantageous cost-wise.

Further, the slow release pesticide formulation according to the present invention can be prepared by rather simple formulation process.

## Mode for Carrying out the Invention

According to the present invention, the pesticide active ingredient means a compound having biocidal activity and being used for agriculture and horticulture. In particular, according to the present invention, the pesticide active ingredient having water solubility not less than 100ppm and melting point not lower than 100°C is preferable. More preferably, the pesticide active ingredient according to the present invention has a water solubility not less than 5000ppm. According to the present invention, the pesticide active ingredient can be a compound, for example, presented by the following general formula (I):

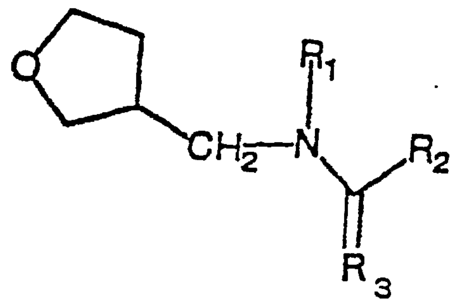

(I)

wherein, $R_1$ is hydrogen atom, $R_2$ is $NHCH_3$ and $R_3$ is $CH\text{-}NO_2$; $R_1$ is hydrogen atom, $R_2$ is $NHCH_3$ and $R_3$ is $N\text{-}NO_2$; or $R_1$ is methyl group, $R_2$ is $N(CH_3)_2$ and $R_3$ is $CH\text{-}NO_2$.

Hereinafter, the compound wherein $R_1$ is hydrogen atom, $R_2$ is $NHCH_3$ and $R_3$ is $CH\text{-}NO_2$ is referred to as Compound 1, the compound wherein $R_1$ is hydrogen atom, $R_2$ is $NHCH_3$ and $R_3$ is $N\text{-}NO_2$ is referred to as Compound 2, and the compound wherein $R_1$ is methyl group, $R_2$ is $N(CH_3)_2$ and $R_3$ is $CH\text{-}NO_2$ is referred to as Compound 3.

According to the present invention, although the content of pesticide active ingredient(s) depends on the physical property of the active ingredient(s) and field applicated, it is generally 0.01 to 50 % by weight, preferably in a range from 0.5 to 20 % by weight.

According to the present invention the hydrophobic substance in an ester family is a compound having an ester linkage in its molecular and hydrophobic property as a whole, having a melting point not lower than 60°C but lower than the melting point of the pesticide active ingredient(s), and having acid value of 10 to 50mg KOH/g. Such compounds are alkyl esters of fatty acids, for example, but the hydrophobic substance in an ester family used in the present invention may contain a small amount of free fatty acid.

The free fatty acid is one of components contained in naturally-derived fats and oils (referred to as wax hereinafter) which comprise esters between higher fatty acids and at least univalent alcohol as main components.

Fatty acids are amphipathic compounds having both hydrophilic carboxylic and hydrophobic hydrocarbon moieties in their molecules, therefore they are compatible with hydrophobic substances such as wax and are also water soluble or hydrophilic. It is considered, therefore, that a mixture comprised of fat containing fatty acids, pesticide active ingredient(s) and the like forms uniform matrix and can highly control release of the active ingredient(s).

Usually, free fatty acid content in wax can be expressed by acid value determined by alkaline titration according to ASTM D1386. The hydrophobic substance in an ester family according to the present invention is defined by said acid value from 10 to 50mg KOH/g and by melting point not lower than 60°C but lower than the melting point of pesticide active ingredient(s). Acid value of wax according to the present invention is preferably in a range from 10 to 30, more preferably in a range from 11 to 25.

The hydrophobic substance in an ester family according to the present invention includes sugar cane wax (melting point 75°C, acid value approximately 21mg KOH/g) extracted from sugar cane and montanic acid ester wax (melting point 74 to 94°C, acid value 10 to 25mg KOH/g).

Sugar cane wax has additional advantage in preparation aspect such as significant improvement of granulating property due to the wide temperature difference between its melting point and solidifying point and having an appropriate hardness.

Montanic acid ester wax is obtained by esterification of montanic acid extracted from lignite and can be prepared in an appropriate acid value by controlling esterification.

The amount of the hydrophobic substance in an ester family to be added to the slow release pesticide formulation according to the present invention varies depending on concentration of pesticide active ingredient(s) to be added, application cases of the pesticide formulation obtained, and physical properties of the inorganic dilution carrier, and is usually at least 5 % by weight, preferably not less than 10 % by weight in the formulation. The upper limit thereof can be established at the level lower than the total oil absorption capacity of the inorganic dilution carrier. Thereby, the mixture does not become glutenous during melting/ mixing process, and it can be discharged in powdery state after the melting/ mixing process. It is also possible to make granules less sticking to each other during granulation process. The upper limit of the amount to be added is preferably 20 % by weight in economical view point.

The inorganic dilution carrier used in the present invention is an inorganic dilution carrier used to adjust the effective concentration of the pesticide active ingredient(s) in the formulation. As the inorganic dilution carrier, any hydrophobic inorganic matter commonly used for pesticide compositions may be used, however calcium carbonate is preferable from the points of cost and convenience of preparation. There are available two types of calcium carbonate; heavy type and light type, and either one or mixture thereof can be used considering oil absorption capacity of the hydrophobic substance in an ester family.

Further, talc or white carbon may be added as the inorganic dilution carrier if oil absorption capacity for calcium carbonate alone is not sufficient. Talc is talcum powder and white carbon contains silicon dioxide as the main component, both commercially available as carrier or diluent for such as pesticide formulation.

According to the present invention, the amount of inorganic dilution carrier to be added to the slow release pesticide formulation can be calculated according to the amounts of both hydrophobic substance in an ester family and pesticide active ingredient(s), and the oil absorption capacity of calcium carbonate necessary for the hydrophobic substance in an ester family to be sufficiently absorbed.

According to the present invention, the preferable type of slow release formulation is granules. Preferred formulation process of a granular slow release pesticide formulation is further described as an example. Said pesticide active ingredient(s), hydrophobic substance in an ester family and inorganic dilution carrier are heated and mixed using a mixer equipped with heating device (floating mixer, for example). The heating temperature is preferably higher than the melting point of hydrophobic substance in an ester family, but lower than the melting point of pesticide active ingredient(s). This is because uniform mixture thereof can not be obtained when heating temperature is lower than the melting point of hydrophobic substance in an ester family which results in not only poor granulation during heating/ granulation process but also in some cases difficulty in obtaining anticipated slow release. If heating temperature is higher than the melting point of pesticide active ingredient(s), both active ingredient(s) and hydrophobic substance in an ester family liquidify and therefore are not mixed uniformly in liquid states or active ingredient(s) is localized during solidifying process, which result in difficulty in obtaining anticipated slow release. After heating/ mixing, the resultant mixture is granulated using any type of granulator equipped with a heating device. For example, an extruder with a screen of appropriate mesh of net is preferable for cylindrical granules and for spherical granules, a rolling pan granulator is preferable. Granulation temperature is set at higher than the melting temperature of hydrophobic substance in an ester family. Resultant granular products are further crushed and sieved to obtain the intended slow release pesticide formulation.

Example

The present invention will be further explained in detail by referring to examples, but preparation methods of formulation and resultant formulation recipe are not limited to these examples. All compositions to be mixed are expressed by parts by weight.

Example 1

Twenty parts of the pesticide active ingredient (Compound 1), 830 parts of calcium carbonate (light type) and 150 parts of montanic acid ester wax (LUWAX OP produced by BASF; melting point 84°C, acid value 11mg KOH/g) were put together in a floating mixer and heated up to 90°C while mixing. Resultant mixture was in powdery state and granulated passing through a horizontal kneader (screen mesh 1.0mm) kept at 100°C. Granules obtained were crushed in a crusher. Crushed product was sieved to obtain 14-28 mesh granules.

Example 2

Twenty parts of the pesticide active ingredient (Compound 1), 820 parts of calcium carbonate (heavy type) and 20 parts of white carbon (WC-80D, Shionogi & Co.) as carrier, and 140 parts of sugar cane wax (melting point 75°C, acid value 21mg KOH/g) were put together in a floating mixer and heated up to 80°C while mixing. Resultant mixture was in powdery state and granulated passing through a horizontal kneader (screen mesh 1.0mm) kept at 90°C. Granules obtained were crushed in a crusher. Crushed product was sieved to obtain 14-28 mesh granules.

Example 3

Twenty parts of the pesticide active ingredient (Compound 1), 730 parts of calcium carbonate (heavy type) and 100 parts of S talc, and 150 parts of sugar cane wax (melting point 75°C, acid value 21mg KOH/g) were put together in a floating mixer and heated up to 80°C while mixing. Resultant mixture was in powdery state and granulated passing through a horizontal kneader (screen mesh 1.0mm) kept at 90°C. Granules obtained were crushed in a crusher. Crushed product was sieved to obtain 14-28 mesh granules.

Examples 4 to 10

According to similar procedure described in Example 3, granular formulations in various composition listed in Table 1 were prepared.

Table 1.

| Example | Active ingredient | | Wax | | Carrier | |
|---|---|---|---|---|---|---|
| | Compound No. | Parts | Product name | Parts | Product name | Parts |
| 4 | 1 | 20 | LUWAX OP | 145 | $CaCO_3$ (light)<br>WC#80D | 830<br>5 |
| 5 | 2 | 20 | Sugar cane wax | 150 | $CaCO_3$ (heavy)<br>talc | 730<br>100 |
| 6 | 2 | 20 | Sugar cane wax | 150 | $CaCO_3$ (heavy)<br>talc | 630<br>200 |
| 7 | 2 | 20 | LUWAX E (*1) | 130 | $CaCO_3$ (heavy)<br>WC#80D | 845<br>5 |
| 8 | 3 | 20 | LUWAX LGE (*2) | 150 | $CaCO_3$ (light) | 830 |
| 9 | 3 | 20 | Sugar cane wax | 140 | $CaCO_3$ (light) | 835 |
| 10 | 3 | 20 | LUWAX OP | 140 | $CaCO_3$ (heavy)<br>WC#80D | 835<br>5 |

*1) LUWAX E: montanic acid ester (BASF, melting point 76°C, acid value 21)

*2) LUWAX LEG: montanic acid ester (BASF, melting point 73°C, acid value 25)

Example 11

2.35 parts of the pesticide active ingredient (Compound 3) and 15.67 parts of sugar cane wax (melting point 75°C, acid value 21mg KOH/g) were put together in a Erlenmeyer flask and heated up to 80 to 90°C while mixing. 81.98 parts of calcium carbonate was added to the flask at the same temperature range and the mixture was cooled down to room temperature while vigorously mixing. Resultant mixture was uniformly ground in a bench pulverizer to obtain dust formulation.

Comparative Example 1

Twenty parts of the pesticide active ingredient (Compound 1), 835 parts of calcium carbonate (heavy type) and 145g of paraffin wax (melting point 60°C, acid value 0mg KOH/g) were put together in a floating mixer and heated up to 70°C while mixing. Resultant mixture was in powdery state containing block state lumps block state and granulated passing through a horizontal kneader (screen mesh 1.0mm) kept at 70°C. Granules obtained were crushed in a crusher. Crushed product was sieved to obtain 14-28 mesh granules.

Comparative Example 2

Twenty parts of the pesticide active ingredient (Compound 1), 830 parts of calcium carbonate (light type) and 150g of carnauba wax (melting point 83°C, acid value 9mg KOH/g) were put together in a floating mixer and heated up to 85°C while mixing. Resultant mixture was in glutenous state and formed blocks when cooled. When the mixture was granulated passing through a horizontal kneader (screen mesh 1.0mm) kept at 95°C, granules partially stuck each other. Granules obtained were crushed in a crusher. Crushed product was sieved to obtain 14-28 mesh granules.

Comparative Example 3

Twenty parts of the pesticide active ingredient (Compound 1), 670 parts of calcium carbonate (heavy type) and 50 parts of white carbon (WC-80D, Shionogi & Co.), 20 parts of polyvinyl alcohol and 240 parts of carnauba wax (melting point 83°C, acid value 9mg KOH/g) were put together in a floating mixer and heated up to 85°C while mixing. Resultant mixture was in glutenous state and formed blocks when cooled. When the mixture was granulated passing through a horizontal kneader (screen mesh 1.0mm) kept at 95°C, granules partially stuck each other. Granules obtained were crushed in a crusher as block. Crushed product was sieved to obtain 14-28 mesh granules.

Comparative Examples 4 to 7

According to similar procedure described in comparative example 3, granular formulations in various composition listed in Table 2 were prepared for comparison.

Table 2.

| Com. Ex. No. | Active ingredient | | Wax | | Carrier | |
|---|---|---|---|---|---|---|
| | Compound No. | Parts | Product name | Parts | Product name | Parts |
| 4 | 1 | 20 | LUWAX EVA(*1) | 150 | $CaCO_3$ (light)<br>WC #80D | 825<br>5 |
| 5 | 2 | 20 | Paraffin wax | 180 | $CaCO_3$ (light)<br>talc | 700<br>100 |
| 6 | 2 | 20 | LUWAX S (*2) | 150 | $CaCO_3$ (heavy)<br>talc | 750<br>80 |
| 7 | 3 | 20 | Carnauba wax | 150 | $CaCO_3$ (heavy) | 830 |

*1) LUWAX EVA: ethylene/ vinyl acetate co-polymer (BASF, melting point 93°C, acid value 0mg KOH/g)

*2) LUWAX S: montanic acid (BASF, melting point 75°C, acid value 143mg KOH/g)

Test 1

Percent of the pesticide active ingredients (Compounds 1 to 3) released from granules obtained as described in Examples and Comparative Examples and their insecticidal activities were determined.

(1) Percent of active ingredient released

Percent of the pesticide active ingredient released in water was determined as follows: 250mg of each granules prepared as described in Examples and Comparative Examples was transferred to a 50-ml sample vial containing 25 ml of standard 3 degree hard water. The sample vials were tightly stoppered and dipped into water kept at 25°C. After allowed to stand in water bath for the pre-determined period, entire content of the vial was filtered and filtrate was analyzed for the released active ingredient by HPLC. Percent of the released active ingredient was calculated from analytical data according to the following formula and results were summarized in Table 3.

Released ratio(%) = (Content of active ingredient in filtrate

/ Content of active ingredient in tested granules) x 100

Table 3.

| Sample | Compound No. | Released ratio (%) | | | | |
|---|---|---|---|---|---|---|
| | | 3 DAT | 7 DAT | 15 DAT | 30 DAT | 60 DAT |
| Example 1 | 1 | 23.2 | 42.7 | 60.6 | 81.1 | 99.4 |
| Example 2 | 1 | 26.1 | 46.2 | 61.7 | 83.8 | 98.7 |
| Example 3 | 1 | 22.8 | 38.7 | 58.5 | 76.4 | 99.8 |
| Example 4 | 1 | 25.4 | 45.1 | 61.1 | 81.9 | 98.5 |
| Example 5 | 1 | 24.3 | 41.5 | 60.4 | 82.0 | 98.9 |
| Example 6 | 2 | 23.9 | 40.0 | 59.3 | 81.7 | 99.0 |
| Example 7 | 2 | 23.1 | 39.8 | 59.0 | 79.1 | 98.8 |
| Example 8 | 2 | 22.8 | 39.0 | 58.8 | 78.0 | 99.1 |
| Example 9 | 2 | 24.0 | 42.5 | 60.9 | 81.1 | 98.4 |

Table 3. (continued)

| Sample | Compound No. | Released ratio (%) | | | | |
|---|---|---|---|---|---|---|
| | | 3 DAT | 7 DAT | 15 DAT | 30 DAT | 60 DAT |
| Example 10 | 2 | 23.5 | 41.0 | 58.2 | 80.9 | 99.0 |
| Example 11 | 3 | 28.9 | 50.71 | 77.1 | 87.92 | - |
| Com.Ex.1 | 1 | 7.5 | 7.6 | 8.4 | 8.7 | 9.1 |
| Com.Ex.2 | 1 | 9.7 | 15.9 | 22.4 | 25.7 | 30.8 |
| Com.Ex.3 | 1 | 30.2 | 42.9 | 50.1 | 53.0 | 61.4 |
| Com.Ex.4 | 1 | 100.0 | - | - | - | - |
| Com.Ex.5 | 2 | 8.0 | 8.1 | 8.6 | 9.4 | 10.2 |
| Com.Ex.6 | 2 | 100.0 | - | - | - | - |
| Com.Ex.7 | 3 | 10.4 | 16.1 | 24.2 | 28.4 | 34.5 |
| DAT: days after treatment in water | | | | | | |

As it can be seen from Table 3, formula-tions according to the present invention can constantly release the active ingredient for approximately 2 months. Furthermore, the pesticide active ingredient was almost completely released into water during the period of approximately 2 months. Meanwhile, 100% of the pesticide active ingredient was released into water immediately after application of granular for Comparative Examples 4 and 6. For Comparative Examples 1, 2, 3 and 7, although the pesticide active ingredient was gradually released, most pesticide active ingredient did not release from the granules and remained in granules. In particular, Comparative Example 3 which was in accord with the Patent Gazette WO 95/09532 showed incomplete release of the pesticide active ingredient from granules in spite of relatively high initial release. In Comparative Example 5, there was very little release.

(2) Mortality

Insect control ratio was determined as follows: 50g of each granules prepared as described in Examples and Comparative Examples was applied to respective rice seedling boxes (30 x 60cm, total surface area 0.18$m^2$) in which 2.5 leave stage rice seedlings (variety: Koshihikari) were planted. Following day, 5 seedlings with applied granules were transplanted to Wagner pot (1/5000 a). Accompanied granules were calculated 50mg/pot. Test was carried out at 3 replicates. 20, 40 and 60 days after transplanting, rice seedlings were covered by a cylindrical screen and 10 female adults of Nilaparvata lugens were released into each screen. Mortality was determined 48 hours after release and expressed as percent of dead insects to total insects tested. Results were shown in Table 4.

Table 4.

| Sample | Compound No. | Mortality (%) | | |
|---|---|---|---|---|
| | | 20 DAT | 40 DAT | 60 DAT |
| Example 1 | 1 | 100 | 100 | 70 |
| Example 2 | 1 | 100 | 100 | 70 |
| Example 3 | 1 | 100 | 100 | 80 |
| Example 4 | 1 | 100 | 100 | 80 |
| Example 5 | 1 | 100 | 100 | 80 |
| Example 6 | 2 | 100 | 100 | 80 |
| Example 7 | 2 | 100 | 100 | 70 |
| Example 8 | 2 | 100 | 100 | 80 |
| Example 9 | 2 | 100 | 100 | 70 |
| Example 10 | 2 | 100 | 100 | 80 |

Table 4. (continued)

| Sample | Compound No. | Mortality (%) | | |
|---|---|---|---|---|
| | | 20 DAT | 40 DAT | 60 DAT |
| Com.Ex.1 | 1 | 30 | 0 | 10 |
| Com.Ex.2 | 1 | 50 | 20 | 20 |
| Com.Ex.3 | 1 | 100 | 20 | 20 |
| Com.Ex.4 | 1 | 100 | 50 | 20 |
| Com.Ex.5 | 1 | 30 | 10 | 0 |
| Com.Ex.6 | 2 | 100 | 40 | 20 |
| Com.Ex.7 | 2 | 50 | 20 | 20 |
| DAT: days after transplanting | | | | |

As is obvious from Table 4, formulations according to the present invention give more than 70% mortality even approximately 2 months after treatment. On the contrary, formulations prepared in Comparative Examples give low mortality 2 months after treatment, in particular formulations having low releasing ratio or poor slow releasing property of the active ingredient show extremely low mortality.

## Claims

1. A slow release pesticide formulation, **characterized in that** it contains at least one of pesticidal components, a hydrophobic substance in an ester family which has a melting point not lower than 60°C but lower than the melting point of the pesticidal component and has an acid value from 10 to 50mg KOH/g, and inorganic dilution carrier.

2. The slow release pesticide formulation claimed in Claim 1, wherein the hydrophobic substance in an ester family is sugar cane wax.

3. The slow release pesticide formulation claimed in Claim 1, wherein the hydrophobic substance in an ester family is montanic acid ester.

4. A slow release pesticide formulation claimed in Claim 1, wherein each pesticidal component has water solubility of at least 100ppm.

5. A slow release pesticide formulation claimed in Claim 1, wherein the pesticidal component is at least one compound selected from the group of the compounds presented by the following general formula (1);

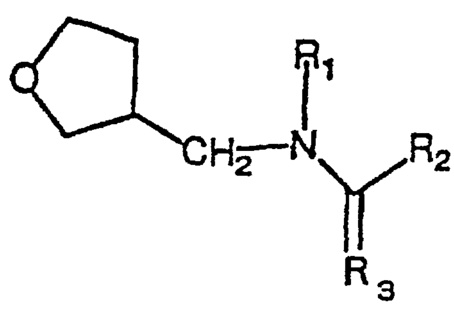

(I)

wherein, $R_1$ is hydrogen atom, $R_2$ is $NHCH_3$ and $R_3$ is $CH\text{-}NO_2$; $R_1$ is hydrogen atom, $R_2$ is $NHCH_3$ and $R_3$ is $=N\text{-}NO_2$; or $R_1$ is methyl group, $R_2$ is $N(CH_3)_2$ and $R_3$ is $CH\text{-}NO_2$.

6. A slow release pesticide formulation obtained by kneading a mixture of at least one of pesticidal components, a

hydrophobic substance in an ester family which has a melting point not lower than 60°C but lower than the melting point of the pesticidal component and has an acid value from 10 to 50mg KOH/g, and inorganic dilution carrier while heating thereof, followed by granulating and then by crushing thereof, **characterized in that**, during the process of kneading and granulating, the liquid portion is the hydrophobic substance in an ester family and the non liquid portion a mixture of the pesticidal components and inorganic dilution carrier.

**7.** A slow release pesticide formulation claimed in Claim 6, wherein the amount of hydrophobic substance of an ester family to be added is less than the total oil absorption capability of inorganic dilution carrier.

**Patentansprüche**

**1.** Pestizidformulierung mit verzögerter Abgabe, **dadurch gekennzeichnet, daß** sie zumindest eine pestizide Komponente, eine hydrophobe Substanz aus einer Esterfamilie, die einen Schmelzpunkt von nicht geringer als 60°C, jedoch geringer als der Schmelzpunkt der pestiziden Komponente aufweist und eine Säurezahl von 10 bis 50 mg KOH/g besitzt, und einen anorganischen Verdünnungsträger enthält.

**2.** Pestizidformulierung mit verzögerter Abgabe gemäß Anspruch 1, worin die hydrophobe Substanz aus einer Esterfamilie Zuckerrohrwachs ist.

**3.** Pestizidformulierung mit verzögerter Abgabe gemäß Anspruch 1, worin die hydrophobe Substanz aus einer Esterfamilie Montansäureester ist.

**4.** Pestizidformulierung mit verzögerter Abgabe gemäß Anspruch 1, worin die pestizide Komponente eine Wasserlöslichkeit von zumindest 100 ppm aufweist.

**5.** Pestizidformulierung mit verzögerter Abgabe gemäß Anspruch 1, worin die pestizide Komponente zumindest eine Verbindung, ausgewählt aus der Gruppe der Verbindungen der folgenden allgemeinen Formel (I) ist:

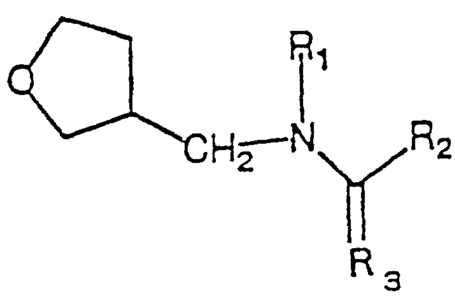

(I)

worin $R_1$ ein Wasserstoffatom ist, $R_2$ für $NHCH_3$ steht und $R_3$ für $CH\text{-}NO_2$ steht; $R_1$ ein Wasserstoffatom ist, $R_2$ für $NHCH_3$ steht und $R_3$ für $N\text{-}NO_2$ steht; oder $R_1$ eine Methylgruppe ist, $R_2$ für $N(CH_3)_2$ steht und $R_3$ für $CH\text{-}NO_2$ steht.

**6.** Pestizidformulierung mit verzögerter Abgabe, erhalten durch Verkneten einer Mischung von zumindest einer pestiziden Komponente, einer hydrophoben Substanz aus einer Esterfamilie, die einen Schmelzpunkt von nicht geringer als 60°C, jedoch geringer als der Schmelzpunkt der pestiziden Komponente besitzt und eine Säurezahl von 10 bis 50 mg KOH/g aufweist, und einem anorganischen Verdünnungsträger unter Erhitzen hiervon, anschließendes Granulieren und dann Zerkleinern hiervon, **dadurch gekennzeichnet, daß** während des Prozesses des Verknetens und Granulierens der flüssige Teil die hydrophobe Substanz aus einer Esterfamilie ist, und der nicht flüssige Teil eine Mischung der pestiziden Komponenten und des anorganischen Verdünnungsträgers ist.

**7.** Pestizidformulierung mit verzögerter Abgabe gemäß Anspruch 6, worin die zuzugebende Menge der hydrophoben Substanz aus eine Esterfamilie geringer ist als die gesamte Ölsabsorptions-Befähigung des anorganischen Verdünnungsträgers.

## Revendications

1. Formulation pesticide à libération lente, **caractérisée en ce qu'**elle contient au moins un constituant pesticide, une substance hydrophobe appartenant à une famille d'esters ayant un point de fusion d'au moins 60°C mais inférieur au point de fusion du constituant pesticide et ayant un indice d'acide de 10 à 50 mg KOH/g, et un support de dilution inorganique.

2. Formulation pesticide à libération lente selon la revendication 1, dans laquelle la substance hydrophobe appartenant à une famille d'esters est une cire de canne à sucre.

3. Formulation pesticide à libération lente selon la revendication 1, dans laquelle la substance hydrophobe appartenant à une famille d'esters est un ester d'acide montanique.

4. Formulation pesticide à libération lente selon la revendication 1, dans laquelle chaque constituant pesticide a une solubilité dans l'eau d'au moins 100 ppm.

5. Formulation pesticide à libération lente selon la revendication 1, dans laquelle le constituant pesticide est au moins un composé choisi dans le groupe des composés représentés par la formule générale (1) suivante:

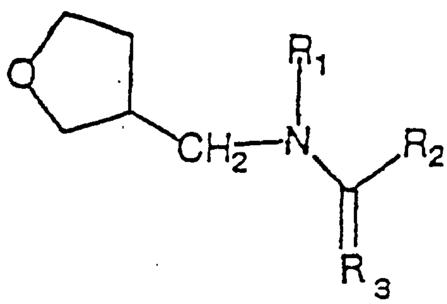

(I)

dans laquelle $R_1$ est un atome d'hydrogène, $R_2$ est un groupe $NHCH_3$ et $R_3$ est un groupe $CH\text{-}NO_2$; $R^1$ est un atome d'hydrogène, $R_2$ est un groupe $NHCH_3$ et $R_3$ est un groupe $N\text{-}NO_2$; ou $R_1$ est un groupe méthyle, $R_2$ est un groupe $N(CH_3)_2$ et $R_3$ est un groupe $CH\text{-}NO_2$.

6. Formulation pesticide à libération lente obtenue par un procédé selon lequel on malaxe en chauffant un mélange d'au moins un constituant pesticide, d'une substance hydrophobe appartenant à une famille d'esters ayant un point de fusion d'au moins 60°C mais inférieur au point de fusion du constituant pesticide et ayant un indice d'acide de 10 à 50 mg KOH/g, et d'un support de dilution inorganique, puis on le granule et on le broie, **caractérisé en ce que**, au cours de l'opération de malaxage et de granulation, la portion liquide est la substance hydrophobe appartenant à une famille d'esters et la portion non liquide est un mélange des constituants pesticides et du support de dilution inorganique.

7. Formulation pesticide à libération lente selon la revendication 6, dans laquelle la quantité de substance hydrophobe appartenant à une famille d'esters à ajouter est inférieure à la capacité totale d'absorption d'huile du support de dilution inorganique.